# FASCICULE DE BREVET EUROPEEN

(11) **EP 2 366 060 B1**
(45) Date de publication et mention de la délivrance du brevet: **05.06.2013**
(21) Numéro de dépôt: 09774885.9
(22) Date de dépôt: 09.12.2009
(51) Int. Cl.: F01D 5/02, F02C 7/04, F16F 15/34, B64C 11/00, F04D 29/66

(54) **Soufflante pour turbomachine comprenant un systeme d'équilibrage à trous borgnes de logement de masses, et turbomachine associée**
Gebläse für ein Turbotriebwerk mit einem Auswuchtsystem mit Blindlöchern zur Unterbringung von Gewichten und zugehöriges Turbotriebwerk
Fan for a turbomachine including a balancing system with blind holes for housing weights, and corresponding turbomachine

(30) Priorité: 10.12.2008 FR 0858451
(43) Date de publication de la demande: 21.09.2011
(73) Titulaire: Snecma, 75015 Paris (FR)
(72) Inventeur: BELMONTE, Olivier, F-77930 Perthes En Gatinais (FR); WELLER, Lionel, René, Henri, F-91750 Champcueil (FR)
(74) Mandataire: Ilgart, Jean-Christophe
(86) Numéro de dépôt international: PCT/EP2009/066734
(87) Numéro de publication internationale: WO 2010/066791

(56) Documents cités:
- FR-A- 921 720
- FR-A1- 2 908 827
- US-A- 1 805 149

## Description

### DOMAINE TECHNIQUE

La présente invention se rapporte de façon générale à une soufflante pour turbomachine. Plus particulièrement, elle concerne le système d'équilibrage équipant la soufflante, permettant l'équilibrage final de la turbomachine.

L'invention s'applique de préférence à un turboréacteur pour aéronef.

### ETAT DE LA TECHNIQUE ANTERIEURE

De l'art antérieur, il est effectivement connu, par exemple du document FR 2 908 827, d'équiper la soufflante d'un turboréacteur avec une bride annulaire d'équilibrage portant des masses judicieusement positionnées, afin de réaliser l'équilibrage final du turboréacteur.

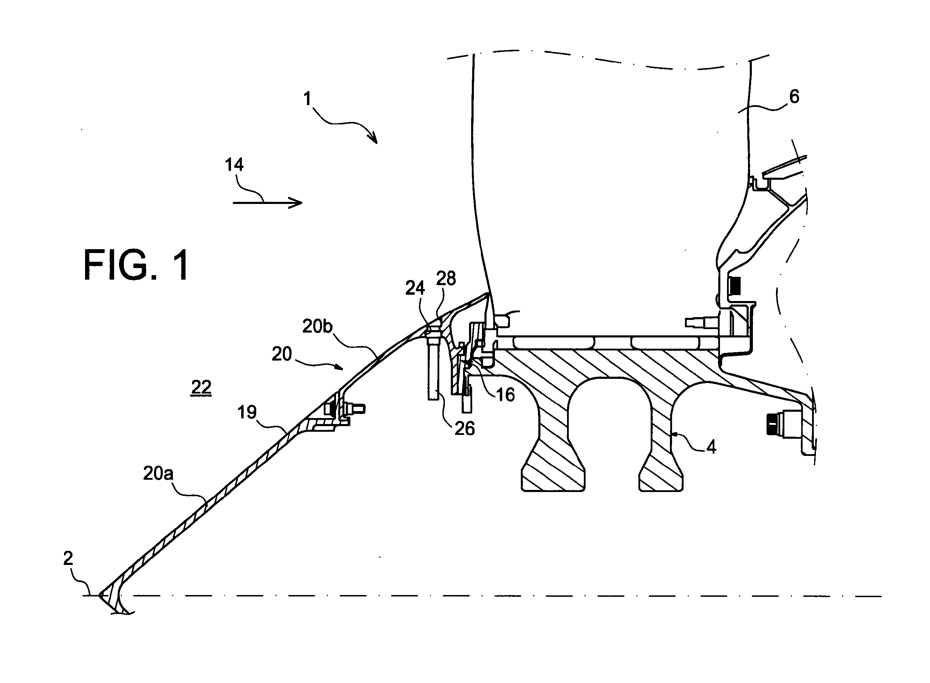

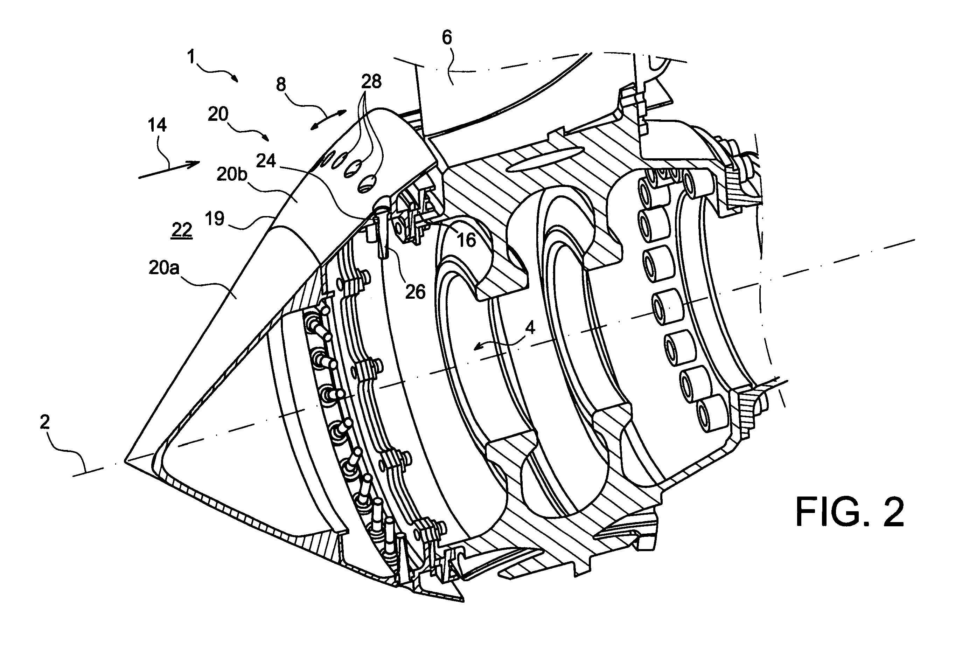

En référence aux figures 1 et 2, il est représenté une réalisation classique et connue de l'art antérieur.

Sur ces figures, on peut donc voir une soufflante 1 d'axe longitudinal ou de rotation 2, correspondant également à l'axe longitudinal du turboréacteur associé. Cette soufflante comprend un disque de soufflante 4 centré sur l'axe 2, des aubes de soufflante 6 rapportées sur le disque 4 et espacées les unes des autres selon une direction circonférentielle ou tangentielle, schématisée par la double-flèche 8.

De cette façon, les aubes 6 sont entraînées en rotation avec le disque 4, autour de l'axe de rotation 2. Elle comprend en outre, de façon connue, des secteurs formant plateforme (non représentés) rapportés fixement sur le disque 4, entre deux aubes 6 directement consécutives dans la direction circonférentielle 8, ces secteurs définissant partiellement une surface inter-aubes destinée à être épousée par un flux annulaire d'air traversant la soufflante, également dénommé veine du turboréacteur. La direction de ce flux ou de cette veine 22, correspondant globalement à la direction principale d'écoulement des gaz au sein du turboréacteur, est représentée par la flèche 14, et est également assimilable à une direction axiale de la soufflante 1.

Par ailleurs, la soufflante 1 est également équipée d'un dispositif annulaire de rétention d'aubes 16, permettant la rétention des aubes 6 dans la direction axiale 14, vers l'amont. A cet égard, il est noté que dans toute la description, les termes « amont » et « aval » sont à considérer selon la direction principale d'écoulement 14 des gaz au sein du turboréacteur.

En amont des aubes de soufflante 6, la soufflante 1 présente un cône d'entrée 20 centré sur l'axe 2, et dont la surface extérieure 19 sensiblement conique est destinée à être épousée par la veine 22 précitée. Ce cône 20, entraîné en rotation selon l'axe 2 avec le disque de soufflante 4, peut être réalisé en une ou plusieurs parties adjacentes, par exemple une partie amont 20a issue du sommet du cône, et une partie aval 20b adjacente aux aubes de soufflante, comme visible sur les figures 1 et 2.

La partie aval 20b, également dénommée virole arrière de capot, peut, outre sa fonction de définition d'une partie de la surface extérieure 19 de délimitation de la veine 22, également intégrer une fonction additionnelle de système d'équilibrage du turboréacteur.

En effet, cette partie aval 20b forme une bride annulaire d'équilibrage couplée en rotation avec le disque de soufflante 4 selon l'axe de rotation 2, équipée d'une pluralité de trous de logement de masse 24 espacés circonférentiellement les uns des autres. A titre d'exemple indicatif, ce sont par exemple trente-six trous traversants 24 qui sont prévus sur l'extrémité radiale externe de la bride d'équilibrage 20b. Comme cela est visible sur les figures 1 et 2, dans les réalisations de l'art antérieur, les trous de logement de masse 24 débouchent donc au niveau de leur extrémité radiale externe dans la veine 22.

En fonctionnement, les trous 24 logent chacun une masse d'équilibrage 26 en forme de vis, dont les dimensions sont retenues de manière à ce que les masses associées permettent un équilibrage optimal du turboréacteur, compensant le balourd résiduel. Ainsi, de façon connue de l'homme du métier, c'est la longueur de tige des vis qui est adaptée en fonction de la masse désirée, ces vis étant logées dans leurs trous associés avec la tête de vis orientée radialement vers l'extérieur.

Néanmoins, si cette configuration permet d'obtenir un équilibrage optimal du turboréacteur, elle n'est pas sans présenter d'inconvénient. En premier lieu, il est indiqué que la nature traversante des trous 24, impliquant qu'ils débouchent dans la veine 22, nécessite que chacun de ces trous soit obturé par une vis d'équilibrage 26, afin d'éviter des fuites de la veine en direction de l'intérieur du cône d'entrée 20. Par conséquent, le nombre important de vis d'équilibrage 26 qui découle de cette contrainte, par exemple trente-six, est extrêmement pénalisant en termes de masse.

De plus, même lorsque les vis 26 sont mises en place, la surface extérieure 19 de définition de la veine 22 ne présente pas un profil aérodynamique parfait, étant donné que des creux 28 subsistent au niveau de l'extrémité radiale externe des trous de fixation de masse, comme cela est clairement visible sur les figures 1 et 2. Ces creux 28, dont les fonds sont constitués par les têtes de vis associées, proviennent essentiellement de l'agencement dans la direction radiale des vis, combiné à la nature sensiblement conique de la surface 19. Avec ce profil aérodynamique pénalisé par les creux 28, l'écoulement d'air sur le cône d'entrée n'est clairement pas optimisé. Il en résulte de la traînée, et par conséquent des pertes de performances de la turbomachine.

### EXPOSÉ DE L'INVENTION

L'invention a donc pour but de remédier au moins partiellement aux inconvénients mentionnés ci-dessus, relatifs aux réalisations de l'art antérieur.

Pour ce faire, l'invention a tout d'abord pour objet une soufflante pour turbomachine d'aéronef, comprenant un cône d'entrée de turbomachine présentant une surface extérieure destinée à être épousée par une veine de la turbomachine, un disque de soufflante ainsi que des aubes de soufflante montées sur ledit disque avec lequel elles tournent selon un axe de rotation de la soufflante, ladite soufflante comprenant en outre un système d'équilibrage couplé en rotation avec le disque de soufflante selon ledit axe de rotation, ledit système d'équilibrage étant équipé d'une pluralité de trous de logement de masse espacés circonférentiellement les uns des autres, et comprenant également au moins une masse d'équilibrage montée dans l'un desdits trous de logement de masse. Selon l'invention, ledit système d'équilibrage comporte en outre des moyens de fixation exerçant une pression plaquant ladite masse d'équilibrage au fond de son trou de logement de masse, ce dernier étant réalisé borgne dans le cône d'entrée, de manière à déboucher à l'intérieur de celui-ci.

La soufflante selon l'invention est remarquable en ce que les trous de logement de masse d'équilibrage ne débouchent plus dans la veine de la turbomachine, de laquelle ils restent effectivement isolés par le cône d'entrée lui-même. En d'autres termes, la surface extérieure aérodynamique du cône se situe donc radialement extérieurement par rapport aux fonds des trous de logement de masse, ces derniers étant donc masqués vis-à-vis de la veine par cette surface extérieure du cône.

Ainsi, le fait que les trous de logement de masse soient masqués par le cône d'entrée, et non plus prévus traversant dans celui-ci, implique avantageusement que la surface extérieure de définition de la veine ne présente plus les creux de logement de masse décrits précédemment en relation avec les réalisations de l'art antérieur. L'écoulement d'air sur le cône d'entrée est donc optimisé, ce qui engendre globalement une diminution de la traînée, et par conséquent une augmentation des performances de la turbomachine.

De plus, le fait de prévoir des trous de logement de masse borgnes non-débouchants dans la veine implique qu'il n'est plus nécessaire de loger une masse dans chaque trou, contrairement aux réalisations antérieures. Par conséquent, il est possible, même préféré, d'aboutir à un équilibrage prévoyant la mise en place de masses seulement dans certains des trous prévus à cet effet, conduisant ainsi avantageusement à une réduction sensible de la masse du système d'équilibrage, et de la soufflante intégrant ce système. Dans certaines conditions, l'équilibrage pourrait même être effectué avec une unique masse logée dans l'un des trous.

Il est de préférence prévu qu'en fonctionnement, au moins un desdits trous de fixation de masse, et encore plus préférentiellement une pluralité de ces mêmes trous, sont laissés libres.

En outre, une autre originalité de la présente invention réside dans la façon dont chaque masse d'équilibrage est retenue dans son trou associé. Elle est en effet plaquée dans le fond de son trou borgne, par pression appliquée par des moyens de fixation prévus à cet effet, et pouvant prendre toute forme réputée appropriée par l'homme du métier. Préférentiellement, ces moyens de fixation sont montés sur le cône d'entrée.

A cet égard, il est précisé que lesdits moyens de fixation et la masse d'équilibrage avec laquelle ils coopèrent forment un ensemble massique d'équilibrage. Chacun des éléments constituant l'ensemble a donc une influence sur la masse globale de cet ensemble. Néanmoins, même s'il pourrait en être autrement, il est préférentiellement fait en sorte que la masse des moyens de fixation soit identique pour tous les ensembles massiques du système d'équilibrage, impliquant alors que seules les masses d'équilibrage ont une influence sur la masse globale des ensembles.

De préférence, lesdits moyens de fixation comprennent une pièce formant écrou et une vis de pression vissée dans ladite pièce, ledit écrou étant retenu audit cône dans la direction de la vis de pression. Dans un tel cas, c'est donc la vis qui vient exercer la pression sur la masse d'équilibrage afin de la plaquer dans le fond de son trou borgne de logement.

De préférence, lesdits trous de logement de masse débouchent dans le fond d'une gorge centrée sur l'axe de rotation, et ladite gorge présente respectivement, de part et d'autre de son fond, deux parois latérales formées de manière à constituer des moyens de retenue de l'écrou dans ladite gorge.

De préférence, ladite gorge s'ouvre radialement vers l'intérieur, mais pourrait alternativement s'ouvrir dans la direction axiale, ou toute autre direction.

De préférence, ladite masse d'équilibrage présente une extrémité en forme de portion sphérique, complémentaire de la forme du fond du trou de logement contre lequel elle est plaquée. Cela permet d'assurer un bon maintien de la masse d'équilibrage, dont l'autre extrémité coopèrent alors avec les moyens de fixation, à savoir préférentiellement la vis de pression. Une extrémité de masse en forme de portion conique serait également possible, prévue également complémentaire de la forme du fond du trou de logement contre lequel elle est plaquée.

De préférence, ledit cône est en aluminium ou l'un de ses alliages. Dans un tel cas, il est noté que les vis de pression ne viennent pas directement en contact avec le cône, mais exercent une pression via la masse d'équilibrage associée, ce qui réduit les risques de détérioration du cône.

De préférence, ledit cône d'entrée est réalisé à partir d'une portion amont montée fixement sur une portion aval formant virole, et ledit système d'équilibrage est implanté sur ladite portion aval formant virole.

De préférence, ledit cône d'entrée comporte une bride annulaire de fixation rapportée fixement sur ledit disque de soufflante, même si elle pourrait être rapportée fixement sur tout autre élément du bloc tournant de la soufflante, sans sortir du cadre de l'invention.

De préférence, la soufflante comporte en outre un anneau de rétention des aubes de soufflante permettant de retenir axialement ces aubes par rapport audit disque de soufflante, ledit anneau de rétention étant couplé en rotation avec ledit disque de soufflante, et de préférence également avec ladite bride annulaire de fixation du cône.

De préférence, ledit cône d'entrée s'étend vers l'aval jusqu'auxdites aubes de soufflante, en une ou plusieurs pièces. Comme mentionné ci-dessus, il est possible de fabriquer le cône d'entrée en une partie amont issue du sommet du cône et une partie aval adjacente aux aubes de soufflante, l'intérêt résidant alors dans la possibilité d'optimiser indépendamment ces parties, par exemple en fonction des niveaux de sollicitations mécaniques/thermiques susceptibles d'être rencontrés par celles-ci.

Enfin, l'invention a également pour objet une turbomachine pour aéronef comprenant une soufflante telle que décrite ci-dessus, ladite turbomachine étant préférentiellement un turboréacteur.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà décrite, représente une vue en coupe longitudinale d'une partie de soufflante pour turboréacteur selon une réalisation classique et connue de l'art antérieur ;
- la figure 2, déjà décrite, représente une vue partielle en perspective de la soufflante montrée sur la figure 1 ;
- la figure 3 représente une vue en perspective de la virole arrière de capot destinée à équiper une soufflante pour turboréacteur, selon un mode de réalisation préféré de la présente invention ;
- la figure 4 représente une vue en coupe longitudinale d'une partie de la virole arrière de capot montrée sur la figure 3, prise selon la ligne IV-IV ;
- la figure 5 est une vue en perspective montrant une partie de l'intérieur de la virole arrière de capot de la figure 3 ; et
- la figure 6 est une vue partielle agrandie de celle montrée sur la figure 5, montrant essentiellement un ensemble massique d'équilibrage coopérant avec l'un des trous de logement du système d'équilibrage équipant la virole arrière de capot.

### EXPOSÉ DÉTAILLÉ DE MODES DE RÉALISATION PRÉFÉRÉS

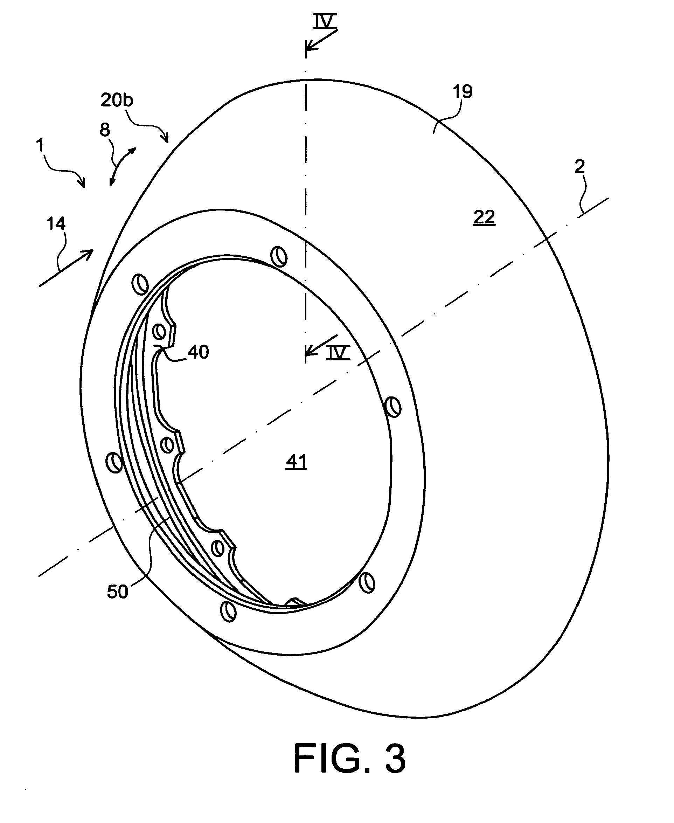

En référence aux figures 3 à 6, on peut apercevoir une partie d'une soufflante 1 pour turboréacteur d'aéronef, selon un mode de réalisation préféré de la présente invention. Plus précisément, il s'agit de la partie aval 20b du cône d'entrée, également dénommée virole arrière de capot, qui non seulement remplit la fonction de définition d'une partie de la surface extérieure 19 de délimitation de la veine 22, mais est également destinée à porter le système d'équilibrage du turboréacteur.

Les autres éléments de la soufflante 1 n'ont pas été représentés pour certains ou que partiellement pour d'autres, mais doivent être considérés, pour ce mode de réalisation préféré, comme identiques ou similaires à ceux décrits en référence aux figures 1 et 2 illustrant l'art antérieur. D'ailleurs, sur les figures, les éléments portant les mêmes références numériques correspondent à des éléments identiques ou similaires.

Cette virole arrière de capot 20b, de préférence réalisée d'un seul tenant en aluminium ou dans l'un de ses alliages, comprend donc une extrémité amont destinée à être fixée sur une partie aval du cône d'entrée, tandis que son extrémité aval est destinée à affleurer les aubes de soufflante jusqu'auxquelles il s'étend. De plus, tout comme dans l'art antérieur décrit précédemment, la virole 20b présente une bride annulaire de fixation, référencée 40 sur les figures. Cette bride 40, s'étendant radialement vers l'intérieur, est montée fixement sur le disque de soufflante 4, afin d'être solidarisée en rotation avec ce dernier, selon l'axe longitudinal 2. Cela s'effectue de manière classique, par exemple par boulons traversant les deux brides. A cet égard, tout comme dans l'art antérieur représenté sur les figures 1 et 2, ces deux brides peuvent être agencées de part et d'autre de l'anneau 16 de rétention des aubes de soufflante, permettant de retenir axialement ces aubes par rapport au disque de soufflante 4. Ici, l'anneau 16, fixé à la bride 40 du cône et au disque 4 le rendant solidaire en rotation de ces deux éléments, se situe donc à l'intérieur de la virole 20b, ce qui l'isole de la veine 22.

Ainsi, ces deux éléments 16, 34 peuvent partager les mêmes moyens de fixation 38 sur le bloc tournant de soufflante.

Comme montré sur la figure 3, on peut faire en sorte que le cône 20 masque également l'anneau 16 de rétention des aubes de soufflante, cette possibilité pouvant être adoptée que l'anneau 16 soit ou non réalisé d'un seul tenant avec la bride 34.

L'une des particularités de l'invention réside dans le fait que le système d'équilibrage équipant la soufflante, destiné à assurer l'équilibrage final du turboréacteur, est agencé à l'intérieur du cône, et plus précisément dans un espace intérieur 41 de sa partie aval 20b, de manière à être masqué de la veine 22.

Plus précisément, le système présente une pluralité de trous de logement de masse 42, pratiqués dans la virole 20b, ces trous 42 étant borgnes et débouchant dans l'espace intérieur défini par cette virole, en étant préférentiellement orientés selon la direction radiale de la soufflante.

Cet agencement spécifique est retenu de sorte que les trous de logement de masse 42 soient isolés de la veine 22 épousant la virole 20b, à savoir non-débouchants dans celle-ci, ou encore masquée de celle-ci.

Outre les trous 42 espacés circonférentiellement les uns des autres dans l'épaisseur de la virole 20b, le système d'équilibrage comprend également au moins un ensemble massique d'équilibrage coopérant avec l'un des trous 42. Un ou plusieurs de ces ensembles massiques sont donc montés sur la virole arrière de capot 20b, respectivement en association avec des trous de logement 42, leur nombre étant fonction de l'équilibrage requis. L'un des avantages de la présente invention réside dans la possibilité, qui est d'ailleurs préférentiellement retenue, d'établir un équilibrage final du turboréacteur en laissant libres un ou plusieurs trous 42, afin d'obtenir un gain de masse. Dans un tel cas, l'absence d'obturation des trous ne logeant aucune masse ne génère pas de problème de fuite au niveau de la veine 22, étant donné que ces trous restent isolés de celle-ci, en particulier grâce à la surface extérieure 19 décalée radialement vers l'extérieur.

Chaque ensemble massique comprend une masse d'équilibrage 44 logée dans le trou 42 associé à cet ensemble, ainsi que des moyens de fixation coopérant avec la virole et exerçant une pression sur la masse 42 afin de la plaquer dans le fond de son trou 42.

Dans ce mode de réalisation préféré, les moyens de fixation comprennent une platine 46 formant écrou, ainsi qu'une vis de pression 48 vissée dans l'écrou, de préférence de manière à être coaxiale au trou 42 dans lequel est logée la masse 44 sur laquelle elle exerce une pression.

Pour maintenir la platine 46 par rapport à la virole 20b, dans la direction radiale de pression, cette virole est équipée d'une gorge 50 centrée sur l'axe 2, les trous de logement 42 débouchant dans le fond 52 de cette gorge. Celle-ci s'ouvre radialement vers l'intérieur, son fond 52 étant donc également orienté selon cette même direction. Elle est non seulement délimitée par son fond 52, mais également par deux parois latérales 54 disposées de part et d'autre de ce dernier. Ces parois 54 sont formées de manière à constituer des moyens de retenue pour la platine 46, créant des projections rétrécissant l'ouverture de la gorge, par exemple sous forme de bourrelets 56.

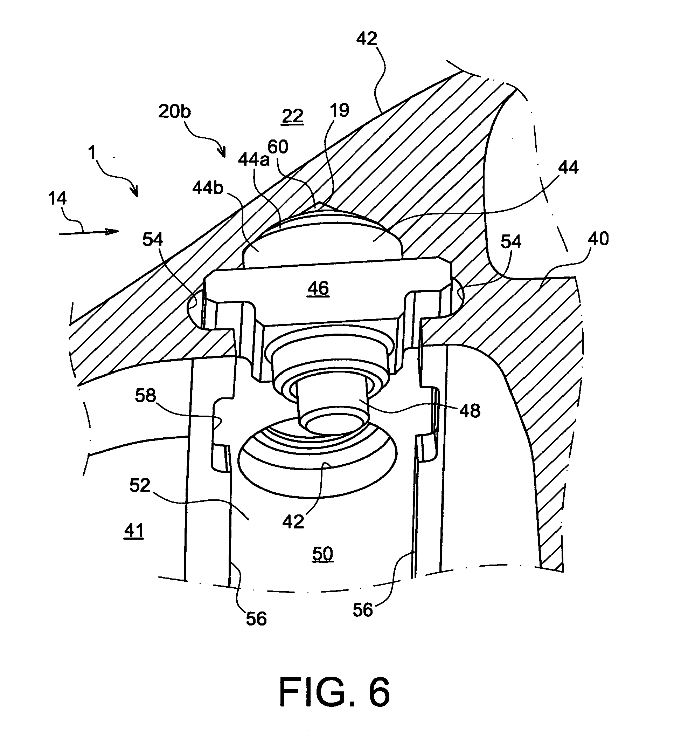

Ainsi, comme montré sur la figure 6, chaque platine 46 peut être insérée dans la gorge 50 au niveau d'une encoche 58 prévue à cet effet dans les parois latérales 54, de préférence par mouvement radial vers l'extérieur de cette platine. Ensuite, elle est déplacée circonférentiellement dans la gorge en glissant dans la fente annulaire délimitée entre le fond 52 et les bourrelets de retenue 56, ce déplacement étant stoppé lorsque la platine 46 se situe en regard de son trou de logement 42 associé.

Le serrage de la vis 48 à travers la platine 46 permet de plaquer la masse d'équilibrage préinstallée dans le fond du trou 42, avec l'extrémité radiale externe de cette vis exerçant une pression sur cette masse, de préférence en étant en contact direct avec celle-ci. Par réaction, la platine 46 vient elle se plaquer contre les bourrelets de retenue 56, garantissant l'absence d'un desserrage de l'assemblage durant le fonctionnement du turboréacteur.

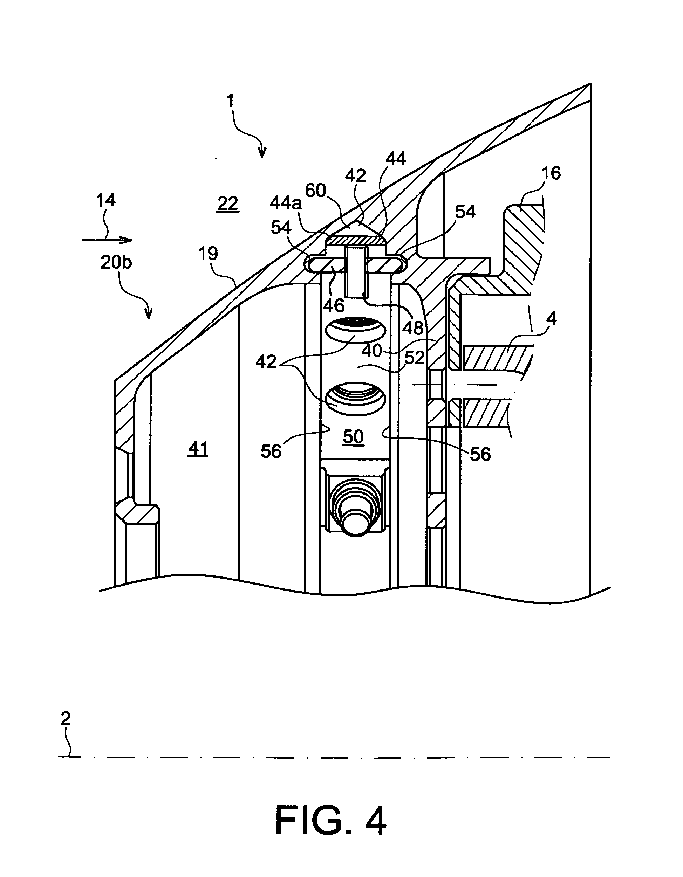

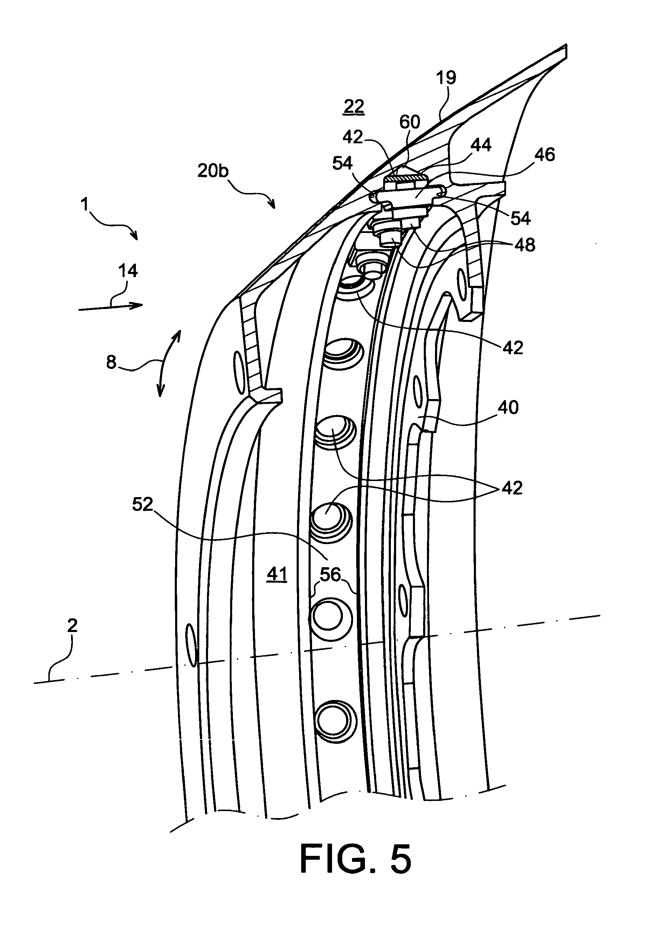

Comme mentionné précédemment, seuls certains trous 42 peuvent être équipés d'un ensemble massique d'équilibrage, les autres trous restant libres. De préférence, pour tous les ensembles massiques utilisés, les platines 46 et les vis 48 sont de forme et de masse identiques, seuls les masses 44 influençant donc la masse globale des ensembles massiques. A titre d'exemple indicatif, on peut voir que la masse 44 de l'ensemble montré sur les figures 4 et 5 est plus faible que la masse 44 de l'ensemble montré sur la figure 6.

Quoi qu'il en soit, il est de préférence fait en sorte que l'extrémité radiale externe de chaque masse 44 se présente sous la forme d'une portion sphérique 44a, en contact avec une forme complémentaire prévue pour le fond du trou 42. Dans le mode de réalisation préféré décrit, chaque trou comprend bien un fond présentant une portion sphérique épousée par la portion sphérique 44a de la masse, mais ne constituant pas l'intégralité de ce fond. En effet, le fond est ici équipé d'un espace mort 60, par exemple de forme conique, formant la continuité de la portion sphérique et n'étant pas comblé par la masse 44 lorsque celle-ci est plaquée dans le fond du trou 42.

La forme de chaque masse d'équilibrage 44 est retenue en fonction de la masse désirée à l'endroit donné, pour un équilibrage final optimisé. De préférence, chaque masse 44 comprend au moins la portion sphérique 44a, comme cela est le cas pour la masse 44 représentée sur les figures 4 et 5, et peut éventuellement être prolongée radialement vers l'intérieur par une portion cylindrique 44b, comme cela est le cas pour la masse 44 représentée sur la figure 6. Dans cette dernière configuration, la portion cylindrique 44b, de préférence de section circulaire, s'étend au maximum jusqu'à l'ouverture du trou, correspondant au fond de la gorge 50 de logement des platines 46.

## Revendications

1. Soufflante (1) pour turbomachine d'aéronef, comprenant un cône d'entrée (20) de turbomachine présentant une surface extérieure (19) destinée à être épousée par une veine (22) de la turbomachine, un disque de soufflante (4) ainsi que des aubes de soufflante (6) montées sur ledit disque avec lequel elles tournent selon un axe de rotation (2) de la soufflante, ladite soufflante comprenant en outre un système d'équilibrage couplé en rotation avec le disque de soufflante (4) selon ledit axe de rotation (2), ledit système d'équilibrage étant équipé d'une pluralité de trous de logement de masse (42) espacés circonférentiellement les uns des autres, et comprenant également au moins une masse d'équilibrage (44) montée dans l'un desdits trous de logement de masse (42),
**caractérisée en ce que** ledit système d'équilibrage comporte en outre des moyens de fixation (46, 48) exerçant une pression plaquant ladite masse d'équilibrage (44) au fond de son trou de logement de masse (42), ce dernier étant réalisé borgne dans le cône d'entrée (20), de manière à déboucher à l'intérieur de celui-ci.

2. Soufflante selon la revendication 1, **caractérisée en ce que** lesdits moyens de fixation et la masse d'équilibrage avec laquelle ils coopèrent forment un ensemble massique d'équilibrage.

3. Soufflante selon la revendication 2, **caractérisée en ce que** lesdits moyens de fixation comprennent une pièce formant écrou (46) et une vis de pression (48) vissée dans ladite pièce, ledit écrou étant retenu audit cône dans la direction de la vis de pression.

4. Soufflante selon la revendication 3, **caractérisée en ce que** lesdits trous de logement de masse (42) débouchent dans le fond d'une gorge (50) centrée sur l'axe de rotation (2), et **en ce que** ladite gorge présente respectivement, de part et d'autre de son fond (52), deux parois latérales (54) formées de manière à constituer des moyens de retenue de l'écrou (46) dans ladite gorge.

5. Soufflante selon la revendication 4, **caractérisée en ce que** ladite gorge (50) s'ouvre radialement vers l'intérieur.

6. Soufflante selon l'une quelconque des revendications précédentes, caractérisée en ce ladite masse d'équilibrage (44) présente une extrémité en forme de portion sphérique, complémentaire de la forme du fond du trou de logement contre lequel elle est plaquée.

7. Soufflante selon l'une quelconque des revendications précédentes, **caractérisée en ce que** ledit cône (20) est en aluminium ou l'un de ses alliages.

8. Soufflante selon l'une quelconque des revendications précédentes, **caractérisée en ce que** ledit cône d'entrée (20) est réalisé à partir d'une portion amont (20a) montée fixement sur une portion aval (20b) formant virole, et **en ce que** ledit système d'équilibrage est implanté sur ladite portion aval formant virole.

9. Soufflante selon l'une quelconque des revendications précédentes, **caractérisée en ce qu'**en fonctionnement, au moins l'un desdits trous de logement de masse (42) est laissé libre.

10. Soufflante selon l'une quelconque des revendications précédentes, **caractérisée en ce que** ledit cône d'entrée comporte une bride annulaire de fixation (40) rapportée fixement sur ledit disque de soufflante (4).

11. Soufflante selon l'une quelconque des revendications précédentes, **caractérisée en ce qu'**elle comporte en outre un anneau de rétention des aubes de soufflante (16) permettant de retenir axialement ces aubes (6) par rapport audit disque de soufflante (4), ledit anneau de rétention (16) étant couplé en rotation avec ledit disque de soufflante (4).

12. Soufflante selon l'une quelconque des revendications précédentes, **caractérisée en ce que** ledit cône d'entrée (20) s'étend vers l'aval jusqu'auxdites aubes de soufflante (6).

13. Turbomachine pour aéronef comprenant une soufflante (1) selon l'une quelconque des revendications précédentes.

14. Turbomachine pour aéronef selon la revendication 13, **caractérisée en ce qu'**elle est un turboréacteur.

## Patentansprüche

1. Gebläse (1) für Luftfahrzeug-Turbotriebwerke, das einen Turbotriebwerk-Eintrittskonus (20) umfasst, der eine äußere Oberfläche (19) aufweist, die dazu bestimmt ist, dass sich eine Strömungsbahn (22) des Turbotriebwerks an sie anlegt, ferner eine Gebläsescheibe (4) sowie Gebläseschaufeln (6) umfasst, die an dieser Scheibe angebracht sind, mit der sie sich um eine Rotationsachse (2) des Gebläses drehen, wobei dieses Gebläse ferner ein Auswuchtsystem umfasst, das mit der Gebläsescheibe (4) um die genannte Rotationsachse (2) drehfest gekuppelt ist, wobei dieses Auswuchtsystem mit einer Vielzahl von Löchern zur Aufnahme von Gewichten (42) ausgestattet ist, die auf dem Außenumfang voneinander beabstandet angeordnet sind, und außerdem mindestens ein Ausgleichsgewicht (44) umfasst, das in eines dieser Löcher zur Aufnahme von Gewichten (42) eingesetzt ist,
**dadurch gekennzeichnet,**
**dass** dieses Auswuchtsystem ferner Befestigungsmittel (46, 48) aufweist, die einen Druck ausüben, durch den das Ausgleichsgewicht (44) auf den Boden seines Lochs zur Aufnahme von Gewichten (42) gepresst wird, wobei letzteres in dem Eintrittskonus (20) dergestalt als Blindloch ausgeführt ist, dass es in dessen Inneres mündet.

2. Gebläse nach Anspruch 1,
**dadurch gekennzeichnet,**
**dass** die genannten Befestigungsmittel und das Ausgleichsgewicht, mit dem sie zusammenwirken, eine Ausgleichsgewicht-Gesamtanordnung bilden.

3. Gebläse nach Anspruch 2,
**dadurch gekennzeichnet,**
**dass** die genannten Befestigungsmittel ein Teil, das eine Mutter (46) bildet, sowie eine Druckschraube (48), die in dieses Teil eingeschraubt ist, enthalten, wobei diese Mutter an dem genannten Konus in der Richtung der Druckschraube festgehalten wird.

4. Gebläse nach Anspruch 3,
**dadurch gekennzeichnet,**
**dass** die Löcher zur Aufnahme von Gewichten (42) im Boden einer Auskehlung (50) münden, die auf die Rotationsachse (2) zentriert ist, und dass diese Auskehlung beiderseits ihres Bodens (52) entsprechend zwei Seitenwände (54) aufweist, die dergestalt ausgebildet sind, dass sie Mittel zum Festhalten der Mutter (46) in dieser Auskehlung bilden.

5. Gebläse nach Anspruch 4,
**dadurch gekennzeichnet,**
**dass** diese Auskehlung (50) sich radial nach innen öffnet.

6. Gebläse nach einem der vorherigen Ansprüche,
**dadurch gekennzeichnet,**
**dass** dieses Ausgleichsgewicht (44) ein Ende mit der Form eines Kugelabschnitts aufweist, die komplementär zu der Form des Bodens des Aufnahmelochs ist, gegen den es gepresst wird.

7. Gebläse nach einem der vorherigen Ansprüche,
**dadurch gekennzeichnet,**
**dass** dieser Konus (20) aus Aluminium oder aus einer Aluminiumlegierung besteht.

8. Gebläse nach einem der vorherigen Ansprüche,
**dadurch gekennzeichnet,**
**dass** dieser Eintrittskonus (20) aus einem vorderen Abschnitt (20a) besteht, der fest an einem hinteren Abschnitt (20b) angebracht ist, welcher einen Ring bildet, und dass dieses Auswuchtsystem an diesem einen Ring bildenden hinteren Abschnitt (20b) eingebaut ist.

9. Gebläse nach einem der vorherigen Ansprüche,
**dadurch gekennzeichnet,**
**dass** im Betrieb mindestens eines dieser Löcher zur Aufnahme von Gewichten (42) unbesetzt gelassen wird.

10. Gebläse nach einem der vorherigen Ansprüche,
**dadurch gekennzeichnet,**
**dass** dieser Eintrittskonus einen ringförmigen Befestigungsflansch (40) enthält, der fest an der Gebläsescheibe (4) angebracht ist.

11. Gebläse nach einem der vorherigen Ansprüche,
**dadurch gekennzeichnet,**
**dass** es ferner einen Gebläseschaufel-Haltering (16) enthält, der es ermöglicht, diese Schaufeln (6) in axialer Richtung an der Gebläsescheibe (4) festzuhalten, wobei dieser Haltering (16) mit dieser Gebläsescheibe (4) drehfest gekuppelt ist.

12. Gebläse nach einem der vorherigen Ansprüche,
**dadurch gekennzeichnet,**
**dass** sich dieser Eintrittskonus (20) nach hinten bis zu den Gebläseschaufeln (6) erstreckt.

13. Luftfahrzeug-Turbotriebwerk, das ein Gebläse (1) nach einem der vorherigen Anspruche aufweist.

14. Luftfahrzeug-Turbotriebwerk nach Anspruch 13,
**dadurch gekennzeichnet,**
**dass** es ein Turbinenluftstrahltriebwerk ist.

## Claims

1. A fan (1) for an aircraft turbine engine, comprising a turbine engine intake cone (20) having an outer surface (19) intended to be followed by a vein (22) of the turbine engine, a fan disk (4) as well as fan blades (6) mounted on said disk with which they rotate about an axis of rotation (2) of the fan, said fan further comprising a balancing system rotationally coupled with the fan disk (4) about said axis of rotation (2), said balancing system being equipped with a plurality of mass accommodation holes (42) spaced apart circumferentially from each other, and also comprising at least one balancing mass (44) mounted in one of said accommodation holes (42),
**characterized in that** said balancing system further includes attachment means (46, 48) exerting pressure flattening said balancing mass (44) against the bottom of its mass accommodation hole (42), the latter being made blind in the intake cone (20), so as to open out inside the latter.

2. The fan according to claim 1, **characterized in that** said attachment means and the balancing mass with which they cooperate form a balancing mass assembly.

3. The fan according to claim 2, **characterized in that** said attachment means comprise a part forming a nut (46) and a pressure screw (48) screwed into said part, said nut being retained to said cone in the direction of the pressure screw.

4. The fan according to claim 3, **characterized in that** said mass accommodation holes (42) open out in the bottom of a groove (50) centered on the axis of rotation (2), and **in that** said groove on either side of its bottom (52) respectively has two sidewalls (54) formed so as to make up the means for retaining the nut (46) in said groove.

5. The fan according to claim 4, **characterized in that** said groove (50) opens radially inwards.

6. The fan according to any of the preceding claims, **characterized in that** said balancing mass (44) has an end with a spherical portion shape, mating the shape of the bottom of the accommodation hole against which it is flattened.

7. The fan according to any of the preceding claims, **characterized in that** said cone (20) is in aluminium or in one of its alloys.

8. The fan according to any of the preceding claims, **characterized in that** said intake cone (20) is made from an upstream portion (20a) fixedly mounted on a downstream portion (20b) forming a shroud, and **in that** said balancing system is implanted on said downstream portion forming a shroud.

9. The fan according to any of the preceding claims, **characterized in that** during operation, at least one of said mass accommodation holes (42) is left free.

10. The fan according to any of the preceding claims, **characterized in that** said intake cone includes an annular attachment flange (40) fixedly added onto said fan disk (4).

11. The fan according to any of the preceding claims, **characterized in that** it further includes a ring for retaining the fan blades (16) with which these blades (6) may be retained axially relatively to said fan disk (4), said retaining ring (16) being rotationally coupled with said fan disk (4).

12. The fan according to any of the preceding claims, **characterized in that** said intake cone (20) extends downstream as far as said fan blades (6).

13. A turbine engine for an aircraft comprising a fan (1) according to any of the preceding claims.

14. The turbine engine for an aircraft according to claim 13, **characterized in that** it is a jet turbine engine.
